Europäisches Patentamt

European Patent Office

Office européen des brevets

(11) Veröffentlichungsnummer: **0 222 449 B1**

## EUROPÄISCHE PATENTSCHRIFT

(45) Veröffentlichungstag der Patentschrift: **05.02.92**

(51) Int. Cl.⁵: **G11B 15/32**, G11B 15/50

(21) Anmeldenummer: **86201938.7**

(22) Anmeldetag: **06.11.86**

(54) **Antriebseinrichtung für einen Wickeldorn eines Aufzeichnungs- und/oder Wiedergabegerätes für einen bandförmigen Aufzeichnungsträger.**

(30) Priorität: **08.11.85 AT 3244/85**

(43) Veröffentlichungstag der Anmeldung:
**20.05.87 Patentblatt 87/21**

(45) Bekanntmachung des Hinweises auf die Patenterteilung:
**05.02.92 Patentblatt 92/06**

(84) Benannte Vertragsstaaten:
**AT DE FR GB**

(56) Entgegenhaltungen:
**EP-A- 0 036 589      EP-A- 0 120 611**
**AT-B- 347 246        DE-B- 1 193 263**
**DE-C- 734 262        GB-A- 450 501**
**GB-A- 878 009        US-A- 2 561 745**

(73) Patentinhaber: **N.V. Philips' Gloeilampenfa-brieken**
**Groenewoudseweg 1**
**NL-5621 BA Eindhoven(NL)**

(72) Erfinder: **Käferböck, Johannes**
**INT. OCTROOIBUREAU B.V. Prof. Holstlaan 7**
**NL-5656 AA Eindhoven(NL)**
Erfinder: **Schafler, Winfried**
**INT. OCTROOIBUREAU B.V. Prof. Holstlaan 7**
**NL-5656 AA Eindhoven(NL)**

(74) Vertreter: **Van Weele, Paul Johannes Frits et al**
**INTERNATIONAAL OCTROOIBUREAU B.V.**
**Prof. Holstlaan 6**
**NL-5656 AA Eindhoven(NL)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Antriebseinrichtung für einen Wickeldorn eines Aufzeichnungs- und/oder Wiedergabegerätes für einen bandförmigen Aufzeichnungsträger, der mit mindestens einem auf den Wickeldorn aufsetzbaren Wickelkern in Verbindung steht, bei welcher zwischen einer von einem Motor her antreibbaren Antriebsscheibe und dem Wickeldorn eine Freilaufkupplung vorgesehen ist, die ein in einem Käfig geführtes Rollensystem aufweist, wobei dessen Rollen je einerseits mit einer Keilfläche und andererseits mit einer Zylinderfläche zusammenwirken, diese Flächen einander gegenüberliegend, einerseits an der Antriebsscheibe und andererseits am Wickeldorn vorgesehen sind und die Rollen zwischen denselben eine Kupplung bewirken, wenn sich die Antriebsscheibe in einer Drehrichtung dreht, in welcher der Wickeldorn zum Aufwickeln des Aufzeichnungsträgers am Wickelkern angetrieben wird. Eine derartige Antriebseinrichtung ist aus der DE-AS 11 93 263 bekannt, wobei in derselben angegeben ist, daß die zwischen der Antriebsscheibe und dem Wickeldorn vorgesehene Freilaufkupplung im Freilauf rückwirkungsfrei sein soll, damit sie den Lauf des Aufzeichnungsträgers nicht störend beeinflußt, wozu vorgeschlagen wird, daß auf den das Rollensystem der Freilaufkupplung führenden Käfig eine Bremse einwirkt. Eine solche ständig auf den Käfig einwirkende Bremse hat aber den Nachteil, daß der Käfig auch in dem Fall gebremst wird, in dem die Kraftübertragung von der Antriebsscheibe zum Wickeldorn erfolgen soll, also auch dann, wenn bei der betreffenden Drehrichtung der Antriebsscheibe der Wickeldorn zum Aufwickeln des Aufzeichnungsträgers am Wickelkern angetrieben wird, was ein zusätzliche Belastung der Antriebseinrichtung zur Folge hat.

Die Erfindung hat sich zum Ziel gesetzt, eine Antriebseinrichtung der eingangs angeführten Gattung so auszubilden, daß im Freilauf der Freilaufkupplung eine einwandfreie Rückwirkungsfreiheit erreicht wird, ohne daß eine zusätzliche Belastung der Antriebseinrichtung in dem Fall besteht, wenn sie bei der betreffenden Drehrichtung der Antriebsscheibe die Kraft von dieser zum Wickeldorn überträgt. Erfindungsgemäß ist hiezu vorgesehen, daß koaxial zu dieser ersten Freilaufkupplung eine zweite, ebenfalls ein Rollensystem aufweisende Freilaufkupplung vorgesehen ist, die zwischen dem das Rollensystem der ersten Freilaufkupplung führenden Käfig und einer stillstehenden Scheibe wirksam ist, wobei die Rollen des Rollensystems dieser zweiten Freilaufkupplung je einerseits mit einer Keilfläche und andererseits mit einer Zylinderfläche zusammenwirken, diese Flächen einander gegenüberliegend einerseits am das Rollensystem der ersten Freilaufkupplung führenden Käfig und andererseits an der stillstehenden Scheibe vorgesehen sind und die Rollen zwischen denselben eine Kupplung bewirken, wenn sich der Wickeldorn in der zum Aufwickeln des Aufzeichnungsträgers am Wickelkern entgegengesetzten Drehrichtung dreht. Auf diese Weise ist erreicht, daß der das Rollensystem der ersten Freilaufkupplung führende Käfig nur in dem Fall gebremst und hier sogar festgehalten wird, wenn sich der Wickeldorn in der zum Aufwickeln des Aufzeichnungsträgers am Wickelkern entgegengesetzten Drehrichtung, also in der sich beim Abwickeln des Aufzeichnungsträgers vom Wickelkern ergebenden Drehrichtung dreht, in welcham Fall der Freilauf der zwischen der Antriebsscheibe und dem Wickeldorn vorgesehenen ersten Freilaufkupplung einwandfrei wirksam sein soll. Hiebei stellt nämlich die zweite Freilaufkupplung eine kraftschlüssige Verbindung zwischen der stillstehenden Scheibe und dem das Rollensystem der ersten Freilaufkupplung führenden Käfig her, so daß dieser gebremst und festgehalten wird, was zur Folge hat, daß in diesem Betriebsfall, auch unter den ungünstigsten Umständen, die Rollen des Rollensystems der ersten Freilaufkupplung außer Eingriff mit den Keilflächen dieser Freilaufkupplung gehalten werden. Hingegen befindet sich die zweite Freilaufkupplung im Freilauf, wenn sich die Antriebsscheibe in der Drehrichtung dreht, in der die erste Freilaufkupplung die Kraft zum Wickeldorn zum Aufwickeln des Aufzeichnungsträgers am Wickelkern überträgt, was zur Folge hat, daß sich der das Rollensystem der ersten Freilaufkupplung führende Käfig vollständig frei drehen kann, da in diesem Fall keine kraftschlüssige Verbindung zur stillstehenden Scheibe besteht und daher auch keine zusätzliche Belastung der Antriebseinrichtung entsteht.

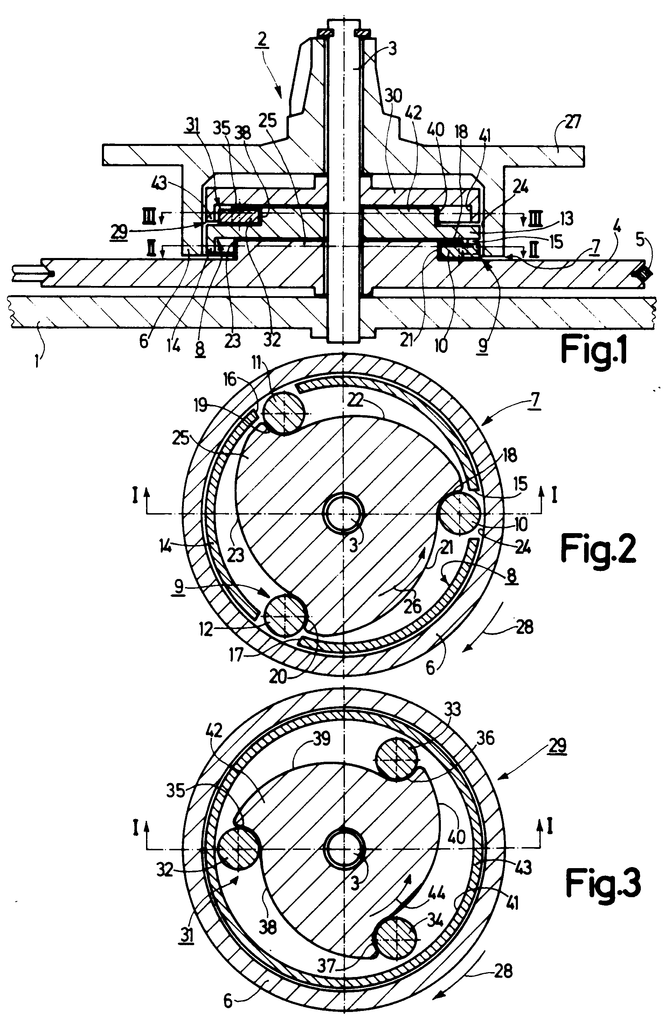

Die Erfindung wird im folgenden anhand der Zeichnung, in welcher ein Ausführungsbeispiel der Erfindung dargestellt ist, auf das sie aber nicht beschränkt sein soll, näher erläutert. Fig.1 zeigt einen Querschnitt durch die Antriebseinrichtung für einen Wickeldorn, die mit zwei Freilaufkupplungen ausgestattet ist, von welchen die erste Freilaufkupplung zum Antreiben des Wickeldorns zum Aufwickeln des Aufzeichnungsträgers am Wickelkern und die zweite Freilaufkupplung zum Abbremsen und Festhalten des das Rollensystem der ersten Freilaufkupplung führenden Käfigs dient, wenn der Aufzeichnungsträger vom Wickelkern abgewickelt und sich der Wickeldorn dabei in der zum Aufwickeln des Aufzeichnungsträgers am Wickelkern entgegengesetzten Drehrichtung dreht. Fig.2 zeigt einen Schnitt nach der Linie II-II in Fig.1, der durch die erste Freilaufkupplung geführt ist, durch die der Wickeldorn zum Aufwickeln des Aufzeichnungsträgers am Wickelkern angetrieben wird. Fig.3 zeigt einen Schnitt nach der Linie III-III in Fig.1, der durch die zweite Freilaufkupplung geführt ist, welche zum Abbremsen und Festhalten des das Rollensystem der ersten Freilaufkupplung führenden Käfigs dient, wenn der Aufzeichnungsträger vom Wickelkern abgewickelt wird und sich der Wickeldorn dabei in der zum Aufwickeln des Aufzeichnungsträgers am Wickelkern entgegengesetzten Drehrichtung dreht.

In Fig.1 ist mit 1 das Chassis eines Aufzeichnungs- und/oder Wiedergabegerätes für einen bandförmigen Aufzeichnungsträger bezeichnet. In üblicher Weise steht ein solcher Aufzeichnungsträger mit seinen beiden Enden mit Wickelkernen in Verbindung, auf die er aufwickelbar beziehungsweise von diesen abwickelbar ist, wobei der Aufzeichnungsträger zusammen mit den Wickelkernen auch in einer Kassette untergebracht sein kann. Zum Antreiben des Aufzeichnungsträgers dienen den beiden Wickelkernen zugeordnete Antriebseinrichtungen, die je einen Wickeldorn aufweisen, auf welchen der betreffende Wickelkern aufsetzbar ist, wobei durch eine formschlüssige Verbindung zwischen dem Wickeldorn und dem Wickelkern, beispielsweise durch am Wickeldorn vorgesehene Rippen, die in korrespondierende Schlitze am Wickelkern eingreifen, dafür Sorge getragen ist, daß beim Antreiben eines Wickeldornes in einer Drehrichtung der betreffende Wickelkern zum Aufwickeln des Aufzeichnungsträgers auf ihn mitgenommen wird, wobei dann vom anderen Wickelkern der Aufzeichnungsträger abgewickelt wird. In Fig.1 ist eine solche Antriebseinrichtung gezeigt, wobei ihr Wickeldorn mit 2 bezeichnet ist. Dieser Wickeldorn 2 sitzt frei drehbar auf einer Welle 3, die am Chassis 1 feststehend befestigt ist. Auf dieser Welle 3 sitzt weiters frei drehbar eine Antriebsscheibe 4, die beispielsweise über eine Pese 5 von einem Motor her antreibbar ist. Zur Kraftübertragung von der Antriebsscheibe 4 zum Wickeldorn 2, der hier mit einem bis zur Antriebsscheibe 4 reichenden, topfförmigen Ansatz 6 versehen ist, dient eine zwischen denselben wirksame, in bekannter Weise aufgebaute und im Schnitt in Fig.2 dargestellte Freilaufkupplung 7.

Diese Freilaufkupplung 7 weist ein in einem Käfig 8 geführtes Rollensystem 9 auf, das im vorliegenden Fall aus drei, gegeneinander winkelversetzt angeordneten Rollen 10, 11 und 12 besteht. An Stelle von Rollen könnten aber auch in bekannter Weise Kugeln vorgesehen sein. Der Käfig 8 ist durch eine auf der Achse 3 frei drehbar angeordnete Scheibe 13 gebildet, die umfangsseitig einen ringförmigen, vorspringenden Ansatz 14 aufweist, in dem drei Ausnehmungen 15, 16 und 17 vorgesehen sind, in welche die Rollen 10, 11 und 12 eingesetzt und so durch den Käfig 8 geführt sind. Jede dieser Rollen 10, 11 und 12 wirkt je für sich einerseits mit einer mit einem Anschlag 18, 19 und 20 für die betreffende Rolle versehenen Keilfläche 21, 22 und 23 und andererseits mit einer allen Rollen gemeinsamen Zylinderfläche 24 zusammen. Beim vorliegenden Ausführungsbeispiel sind die Keilflächen 21, 22 und 23 an der Umfangsfläche eines in axialer Richtung von der Antriebsscheibe 4 in den topfförmigen Ansatz 6 des Wickeldorns 2 hinein vorspringenden Ansatzes 25 vorgesehen. Diesen Keilflächen 21, 22 und 23 gegenüberliegend verläuft die Zylinderfläche 24, die im vorliegendem Fall durch die Innenwandung des topfförmigen Ansatzes 6 des Wickeldornes 2 gebildet ist. Zwischen diesen Keilflächen 21, 22 und 23 und der Zylinderfläche 24 verläuft der ringförmige Ansatz 14 an der Scheibe 13 des Käfigs 8, der die Rollen 10, 11 und 12 führt. Die Keilflächen 21, 22 und 23 sind zusammen mit ihren Anschlägen 18, 19 und 20 für die Rollen 10, 11 und 12 hier so orientiert, daß sie gegenüber der Zylinderfläche 24 sich im Uhrzeigersinn, von den Anschlägen 18, 19 und 20 weg gerichtete verengende Schlitze bilden.

Wird die Antriebsscheibe 4 entgegen dem Uhrzeigersinn, in der Richtung des Pfeiles 26, angetrieben, so bewirken die Keilflächen 21, 22 und 23 ein Verklemmen der Rollen 10, 11 und 12 zwischen diesen Keilflächen 21, 22 und 23 und der Zylinderfläche 24, wodurch eine Kupplung zwischen diesen Flächen hergestellt ist und damit eine Kraftübertragung von der Antriebsscheibe 4 auf den Wickeldorn 2 erfolgt, der sich dann ebenfalls entgegen dem Uhrzeigersinn dreht, wodurch ein auf ihn aufgesetzter Wikkelkern zum Aufwickeln des Aufzeichnungsträgers auf ihn angetrieben wird. Wird hingegen die Antriebsscheibe 4 im Uhrzeigersinn angetrieben, so verbleiben die Rollen 10, 11 und 12, an den Anschlägen 18, 19 und 20 der Keilflächen 21, 22 und 23 anliegend, an den weitesten Stellen der Schlitze zwischen den Keilflächen 21, 22 und 23 und der Zylinderfläche 24, wodurch es zu keinem Verklemmen der Rollen zwischen den Keilflächen und der Zylinderfläche kommt. Dies bedeutet, daß keine Kraftübertragung von der Antriebsscheibe 4 zum Wickeldorn 2 erfolgt und der Wickeldorn 2 daher nicht mitgenommen wird, da sich die Freilaufkupplung im Freilauf befindet. Würde beispielsweise der Wickeldorn 2 unmittelbar selbst entgegen dem Uhrzeigersinn angetrieben werden, so verbleiben die Rollen 10, 11 und 12, ebenfalls an den Anschlägen 18, 19 und 20 der Keilflächen 21, 22 und 23 anliegend, an den weitesten Stellen der Schlitze zwischen den Keilflächen 21, 22 und 23 und der Zylinderfläche 24, wodurch es auch in einem solchen Fall zu keinem Verklemmen der Rollen zwischen den Keilflächen und der Zylinderfläche kommen würde. Somit bestünde auch in einem solchen Fall keine kraftschlüssige Verbindung zwischen dem Wickeldorn 2 und der Antriebsscheibe 4, da sich die Freilaufkupplung 7 wieder im Freilauf befinden und daher keine Beeinflussung des unmittelbaren Antriebes des Wickeldornes erfolgen würde. Mit einem solchen direkten Antrieb des Wickeldornes 2 kann beispielsweise ein schnelles Aufwickeln des Aufzeichnungsträgers auf den auf den Wickeldorn aufgesetzten Wickelkern erfolgen. Hiezu kann beispielsweise ein am Wickeldorn 2 vorgesehener scheibenförmiger Ansatz 27 als Zahnrad ausgebildet sein, in das ein Antriebszahnrad eingekuppelt wird, oder es kann mit diesem Ansatz 27 unmittelbar ein Antriebsreibrad in Wirkverbindung gebracht werden.

Ist auf den Wickeldorn 2 ein Wickelkern aufgesetzt, auf den mit der vorstehend beschriebenen Antriebseinrichtung ein Aufzeichnungsträger aufgewickelt wurde und wird dieser Aufzeichnungsträger durch Abziehen wieder von diesem Wickelkern abgewickelt, so wird dabei der Wickeldorn 2 im Uhrzeigersinn, in der Richtung des Pfeiles 28, in Drehung versetzt. In einem solchen Fall darf es zu keiner Kupplung des Wickeldornes 2 mit der Antriebsscheibe 4 kommen, da hiedurch eine Störung im Lauf des Aufzeichnungsträgers eintreten könnte. An sich würde die Freilaufkupplung 7 auch keine solche Kupplung bewirken, wenn sich ihre Rollen 10, 11 und 12, an den Anschlägen 18, 19 und 20 der Keilflächen 21, 22 und 23 anliegend, an den weitesten Stellen der Schlitze zwischen den Keilflächen 21, 22 und 23 und der Zylinderfläche 24 befinden, da sie bei einer solchen Drehung des Wickeldornes 2 im Uhrzeigersinn theoretisch durch die Zylinderfläche 24 nicht mitgenommen werden würden. In der Praxis ist aber ein solcher Betriebsfall nicht stabil, da es nur durch ein geringfügiges Verstellen sogar nur einer einzelnen Rolle doch zu einer Mitnahme derselben durch die Zylinderfläche 24 kommen kann, was dann zur Folge hat, daß die betreffende Rolle unter Mitnahme des Käfigs 8 in Richtung des enger werdenden Schlitzes verstellt wird, wodurch es zu einem Verklemmen dieser Rolle zwischen der betreffenden Keilfläche und der Zylinderfläche kommt. Über den Käfig 8 würden dann auch die anderen Rollen in eine Klemmposition gebracht werden. Somit würde es zu einer für einen solchen Betriebsfall unerwünschten Kupplung zwischen dem Wickeldorn 2 und der Antriebsscheibe 4 kommen. Um eine derartige unerwünschte Rückwirkung zu vermeiden, ist es bereits bekannt, den Käfig einer solchen Freilaufkupplung mit einer auf ihn einwirkenden Bremse abzubremsen, wodurch erreicht wird, daß der Käfig bestrebt ist, die Rollen an den weitesten Stellen der Schlitze zwischen den Keilflächen und der Zylinderfläche zu halten und so den Freilauf der Freilaufkupplung auch in einem solchen Betriebsfall zu gewährleisten. Eine solche Bremsung des Käfigs bewirkt nämlich eine Reibung, die der Antriebskraft des Teiles der Freilaufkupplung, der antreiben möchte, entgegenwirkt. Dies hat aber den Nachteil, daß die Bremskraft auch in dem Fall wirksam ist, wenn eine Kraftübertragung mit der Freilaufkupplung erfolgen soll, was aber bedeutet, daß dadurch eine zusätzliche Belastung der Antriebseinrichtung eintritt.

Um nun diese Schwierigkeit zu beseitigen, ist koaxial zur bereits beschriebenen Freilaufkupplung 7 eine zweite Freilaufkupplung 29 vorgesehen, die zwischen dem das Rollensystem 9 der ersten Freilaufkupplung 7 führenden Käfig 8 und einer stillstehenden Scheibe 30 wirksam ist. Die Scheibe 30 ist hiebei dem Käfig 8 benachbart, innerhalb des topfförmigen Ansatzes 6 am Wickeldorn 2 feststehend auf der Welle 3 angeordnet. Auch diese zweite, in Fig.3 im Schnitt dargestellte Freilaufkupplung 29 weist ein Rollensystem 31 auf, das hier aus drei gegeneinander winkelversetzt angeordneten Rollen 32, 33 und 34 besteht, die hier der Einfachheit halber im keinem Käfig geführt sind. An sich wäre es natürlich auch bei dieser Freilaufkupplung möglich, die Rollen in einem Käfig zu führen. Die Rollen 32, 33 und 34 des Rollensystems 31 dieser zweiten Freilaufkupplung 29 wirken wieder je für sich einerseits mit einer mit einem Anschlag 35, 36 und 37 für die betreffende Rolle versehenen Keilfläche 38, 39 und 40 und andererseits mit einer allen Rollen gemeinsamen Zylinderfläche 41 zusammen, wobei diese Flächen einander gegenüberliegend einerseits am Käfig 8 der Freilaufkupplung und andererseits an der stillstehenden Scheibe 30 vorgesehen sind. Beim vorliegenden Ausführungsbeispiel sind die Keilflächen 38, 39 und 40 an der Umfangsfläche eines in axialer Richtung von der Scheibe 13 des Käfigs 8 vorspringenden Ansatzes 42 vorgesehen, wogegen die Zylinderfläche 41 durch die Innenwandung eines vorspringenden, den Ansatz 42 am Käfig 8 umgreifenden, ringförmigen Ansatzes 43 an der stillstehenden Scheibe 30 gebildet ist. Die Keilflächen 38, 39 und 40 sind zusammen mit ihren Anschlägen 35, 36 und 37 für die Rollen 32, 33 und 34 hier so orientiert, daß sie gegenüber der Zylinderfläche 41 sich entgegen dem Uhrzeigersinn, von den Anschlägen 35, 36 und 37 weggerichtete verengende Schlitze bilden.

Erfolgt mit der ersten Freilaufkupplung 7 eine Kraftübertragung von der Antriebsscheibe 4 zum Wickeldorn 2, wobei sich, wie im vorstehenden beschrieben, die Antriebsscheibe 4 entgegen dem Uhrzeigersinn dreht, so dreht sich auch der Käfig 8 entgegen dem Uhrzeigersinn, in der Richtung des Pfeiles 44, was für die zweite Freilaufkupplung 29 bedeutet, daß die am Ansatz 42 des Käfigs 8 vorgesehenen Keilflächen 38, 39 und 40 mit ihren Anschlägen 35, 36 und 37 die Rollen 32, 33 und 34 an den weitesten Stellen der Schlitze zwischen den Keilflächen und der Zylinderfläche 41 halten, so daß sich diese zweite Freilaufkupplung 29 im Freilauf befindet und somit zwischen dem Käfig 8 und der stillstehenden Scheibe 30 keine Wirkverbindung besteht. Damit erfolgt die Kraftübertragung von der Antriebsscheibe 4 über die erste Freilaufkupplung 7 zum Wickeldorn 2 ungestört und ohne zusätzliche Belastung.

Dreht sich hingegen der Wickeldorn 2 im Uhrzeigersinn, in der Richtung des Pfeiles 28, wie dies der Fall ist, wenn von einem auf ihn aufgesetzten Wickelkern der Aufzeichnungsträger abgewickelt wird, und wollen dabei die Rollen 10, 11 und 12 der ersten Freilaufkupplung 7 den Käfig 8 derselben, durch ein ungewolltes Zusammenwirken mit der Zylinderfläche 24 am Ansatz 6 des Wickeldornes 2, ebenfalls im Uhrzeigersinn mitnehmen, so ergibt dies auch für den am Käfig 8 vorgesehenen, die Keilflächen 38, 39 und 40 tragenden Ansatz 42 eine Drehung im Uhrzeigersinn, was aber bedeutet, daß sich die Rollen 32, 33 und 34 der zweiten Freilaufkupplung 29 zwischen den Keilflächen 38, 39 und 40 und der Zylinderfläche 41 an der stillstehenden Scheibe 30 verklemmen, wodurch sich aber der Käfig 8 der ersten Freilaufkupplung 7 nicht weiter drehen kann, da er von der stillstehenden Scheibe 30 her über die zweite Freilaufkupplung 29 gebremst und festgehalten wird. Damit ist, wie bereits erläutert, sichergestellt, daß sich in diesem Betriebsfall die erste Freilaufkupplung 7 tatsächlich im Freilauf befindet und damit keine Rückwirkung vom Wickeldorn 2 auf die Antriebsscheibe 4 beziehungsweise umgekehrt erfolgen kann. Auf diese Weise ist für alle Betriebsfälle der Antriebseinrichtung eine einwandfreie Funktionsweise gewährleistet.

Selbstverständlich besteht noch eine Reihe von Abwandlungen des vorstehend beschriebenen Ausführungsbeispieles, ohne daß dabei der Rahmen der Erfindung verlassen wird. So könnten beispielsweise die Keilflächen 21, 22 und 23 der ersten Freilaufkupplung 7 auch an der Innenwandung eines von der Antriebsscheibe 4 vorspringenden, den Ansatz 6 des Wickeldornes 2 umgreifenden, ringförmigen Ansatzes vorgesehen sein, was in analoger Weise auch für die Keilflächen 38, 39 und 40 der zweiten Freilaufkupplung 29 gilt, die dann an der Innenwandung eines von der Scheibe 13 des Käfigs 8 vorspringenden, die stillstehende Scheibe 30 umgreifenden, ringförmigen Ansatzes vorgesehen sein könnten.

## Patentansprüche

1. Antriebseinrichtung für einen Wickeldorn (2) eines Aufzeichnungs- und/oder Wiedergabegerätes für einen bandförmigen Aufzeichnungsträger, der mit mindestens einem auf den Wickeldorn (2) aufsetzbaren Wickelkern in Verbindung steht, bei welcher zwischen einer von einem Motor her antreibbaren Antriebsscheibe (4) und dem Wickeldorn (2) eine Freilaufkupplung (7) vorgesehen ist, die ein in einem Käfig (8) geführtes Rollensystem (9) aufweist, wobei dessen Rollen (10, 11, 12) je einerseits mit einer Keilfläche (21, 22, 23) und andererseits mit einer Zylinderfläche (24) zusammenwirken, diese Flächen einander gegenüberliegend, einerseits an der Antriebsscheibe (4) und andererseits am Wikkeldorn (2) vorgesehen sind und die Rollen (10, 11, 12) zwischen denselben eine Kupplung bewirken, wenn sich die Antriebsscheibe in einer Drehrichtung dreht, in welcher der Wickeldorn (2) zum Aufwickeln des Aufzeichnungsträgers am Wickelkern angetrieben wird, dadurch gekennzeichnet, daß koaxial zu dieser ersten Freilaufkupplung (7) eine zweite, ebenfalls ein Rollensystem (31) aufweisende Freilaufkupplung (29) vorgesehen ist, die zwischen dem das Rollensystem (9) der ersten Freilaufkupplung (7) führenden Käfig (8) und einer stillstehenden Scheibe (30) wirksam ist, wobei die Rollen (32, 33, 34) des Rollensystems (31) dieser zweiten Freilaufkupplung (29) je einerseits mit einer Keilfläche (38, 39, 40) und andererseits mit einer Zylinderfläche (41) zusammenwirken, diese Flächen einander gegenüberliegend einerseits am das Rollensystem (9) der ersten Freilaufkupplung (7) führenden Käfig (8) und andererseits an der stillstehenden Scheibe (30) vorgesehen sind und die Rollen (32, 33, 34) zwischen denselben eine Kupplung bewirken, wenn sich der Wickeldorn (2) in der zum Aufwickeln des Aufzeichnungsträgers am Wickelkern entgegengesetzten Drehrichtung dreht.

## Claims

1. A drive system for a winding mandrel (2) of a recording and/or reproducing apparatus for a record carrier in the form of a tape which is connected to at least one reel hub which is engageable with the winding mandrel (2), a freewheel clutch (7) being provided between a drive wheel (4), which is drivable by a motor, and the winding mandrel (2), which freewheel clutch comprises a roller system (9) guided in a cage (8), the rollers (10, 11, 12) of said roller system each cooperating both with an inclined surface (21, 22, 23) and with a cylindrical surface (24), said surfaces being provided opposite one another on the drive wheel (4) and on the winding mandrel (2), and the rollers (10, 11, 12) establishing a coupling between said surfaces when the drive wheel rotates in a direction of rotation in which the winding mandrel (2) is driven to wind the record carrier onto the reel hub, characterised in that there is provided a second freewheel clutch (29), which is coaxial with said first freewheel clutch (7) and which also comprises a roller system (31), to act between the cage (8) guiding the roller system (9) of the first freewheel clutch (7) and a stationary disc (30), the rollers (32, 33, 34) of the roller system (31) of this second freewheel clutch (29) each cooperating both with an inclined surface (38, 39,40) and with a cylindrical surface (41), said surfaces being provided opposite one another on the cage (8) guiding the roller system (9) of the first freewheel clutch (7) and on the stationary disc (30), and the rollers (32, 33, 34) establishing a coupling between said surfaces when the winding mandrel (2) rotates in the direction of rotation opposite to that for winding the record carrier onto the reel hub.

**Revendications**

1.  Dispositif d'entraînement pour un mandrin de bobinage (2) d'un appareil d'enregistrement et/ou de reproduction pour un support d'enregistrement en forme de bande, dispositif d'entraînement qui est en rapport avec au moins un noyau d'enroulement pouvant être monté sur le mandrin de bobinage (2), dans lequel un accouplement à roue libre (7) est prévu entre un disque d'entraînement (4) pouvant être entraîné par un moteur et le mandrin de bobinage (2), cet accouplement à roue libre présentant un système à rouleaux (9) guidés dans une cage (8), cependant que chacun de ses rouleaux (10, 11, 12) coopèrent d'une part avec une surface conique (21, 22, 23) et d'autre part avec une surface cylindrique (24), ces surfaces situées l'une en face de l'autre étant portées par le disque d'entraînement (4) d'une part et le mandrin de bobinage (2) d'autre part et les rouleaux (10, 11, 12) réalisant entre elles un accouplement lorsque le disque d'entraînement tourne dans une direction de rotation pour laquelle le mandrin de bobinage (2) est entraîné pour enrouler le support d'enregistrement sur le noyau d'enroulement, caractérisé en ce qu'un deuxième accouplement à roue libre, présentant également un système à rouleaux (31), est prévu coaxialement à ce premier accouplement à roue libre (7) ce deuxième accouplement à roue libre fonctionnant entre la cage (8) guidant le système à rouleaux (9) du premier accouplement à roue libre (7) et un disque fixe (30), cependant que les rouleaux (32, 33, 34) du système à rouleaux (31) de ce deuxième accouplement à roue libre (29) coopèrent chacun d'une part avec une surface conique (38, 39, 40) et d'autre part avec une surface cylindrique (41), ces surfaces situées l'une en face de l'autre étant portées d'une part par la cage guidant le système à rouleaux (9) du premier accouplement à roue libre et d'autre part par le disque fixe (30) et cependant que les rouleaux (32, 33, 34) réalisent entre elles un accouplement lorsque le mandrin de bobinage (2) tourne dans la direction de rotation opposée à celle de l'enroulement du support d'enregistrement sur le noyau d'enroulement.

Fig.1

Fig.2

Fig.3